(19) Europäisches Patentamt
European Patent Office
Office européen des brevets

(11) **EP 1 985 476 A1**

(12) **EUROPEAN PATENT APPLICATION**
published in accordance with Art. 158(3) EPC

(43) Date of publication:
**29.10.2008 Bulletin 2008/44**

(51) Int Cl.:
*B60G 17/00* (2006.01)    *B60G 17/018* (2006.01)
*F16F 15/03* (2006.01)    *H02P 21/00* (2006.01)
*H02P 27/04* (2006.01)

(21) Application number: **06833100.8**

(22) Date of filing: **15.11.2006**

(86) International application number:
**PCT/JP2006/323259**

(87) International publication number:
**WO 2007/094107 (23.08.2007 Gazette 2007/34)**

(84) Designated Contracting States:
**DE FR GB**

(30) Priority: **16.02.2006 JP 2006039198**

(71) Applicants:
• **KAYABA INDUSTRY CO., LTD.**
  **Minato-ku**
  **Tokyo 105-6111 (JP)**
• **Toyota Jidosha Kabushiki Kaisha**
  **Toyota-shi, Aichi 471-8571 (JP)**

(72) Inventors:
• **KUBOTA, Tomoo**
  **Tokyo 105-6111 (JP)**
• **INOUE, Hirofumi**
  **Toyota-shi, Aichi 471-8571 (JP)**

(74) Representative: **Albutt, Anthony John**
  **D Young & Co**
  **120 Holborn**
  **London EC1N 2DY (GB)**

(54) **ELECTROMAGNETIC SUSPENSION DEVICE**

(57)    In an electromagnetic suspension device comprising one member (1), the other member (2) adapted to perform a relative motion with respect to the one member (1), and a motor (M) capable of at least suppressing the relative motion, and wherein electric current values id and iq of d and q phases are determined using dq conversion from electric currents iv and iu flowing in the motor (M) and an electrical angle θ of a rotor, and the motor (M) is controlled on the basis of both d-phase voltage command value Vd1 and q-phase voltage command value Vq1, the improvement **characterized by** further comprising correction means (23) for correcting the d-phase voltage command value Vd1 on the basis of both q-phase electric current iq and electrical angular velocity ω of the rotor and correcting the q-phase voltage command value Vq1 on the basis of both d-phase electric current id and electrical angular velocity ω of the rotor.

FIG. 2

**Description**

FIELD OF ART

The present invention relates to an improvement of an electromagnetic suspension device most suitable for vehicles.

BACKGROUND ART

For example, in Japanese Patent Laid-Open Publication No. 2003-104025 there is disclosed an electromagnetic suspension device wherein a linear motor is comprised of a tube connected to either a sprung member or an unsprung member of a vehicle, a rod connected to either the sprung member or the unsprung member and inserted into the tube, plural permanent magnets arranged axially on the outer periphery of the rod, and plural windings disposed on the inner periphery of the tube in opposition to the permanent magnets, an electromagnetic force of the linear motor being utilized as a load (control force) for suppressing an axial relative motion between the rod and the tube.

As to control of a motor in an electromagnetic suspension device, as is disclosed in Japanese Patent Laid-Open Publication No. Hei 6 (1994)-153569, there is performed a proportional-integral control which utilizes vectors of d and q phases. More particularly, there is known a method which comprises making dq conversion from arbitrary two-phase electric current values out of electric currents flowing in motor windings and a rotor's electrical angle to calculate electric currents of d phase in the direction of a magnetic flux created by a magnetic field and q phase orthogonal to d phase, calculating a d-phase voltage command value and a q-phase voltage command value on the basis of a d-phase electric current target value set to 0 and a q-phase electric current target value calculated separately, converting the d- and q-phase voltage command values into three-phase voltage command values, and performing a PWM (Pulse Width Modulation) control for the motor on the basis of the three-phase voltage command values.

The d and q phases are phase windings obtained by dq conversion which is for conversion to orthogonal two-phase windings equivalent to three-phase U, V, W windings of the motor, simplifying the motor control.

Eventually, a motor control unit converts the aforesaid dq-phase voltage command values into actual three-phase voltage command values in accordance with the following expression (1) and controls the motor:

$$
\begin{bmatrix} Vu \\ Vv \\ Vw \end{bmatrix} = \sqrt{\frac{2}{3}} \begin{bmatrix} \cos\theta & -\sin\theta \\ \cos(\theta - \frac{2}{3}\pi) & -\sin(\theta - \frac{2}{3}\pi) \\ \cos(\theta + \frac{2}{3}\pi) & -\sin(\theta + \frac{2}{3}\pi) \end{bmatrix} \begin{bmatrix} Vd \\ Vq \end{bmatrix} \cdots (1)
$$

DISCLOSURE OF THE INVENTION

In the above conventional electromagnetic suspension device, the d and q phase electric currents, in a steady state, are controlled so as to follow up the respective electric current target values because integral compensation is performed. However, in a dynamic state in the control using the above dq conversion, not only the d-phase electric current and the q-phase electric current interfere with each other but also, under the influence of induced electromotive force, there occurs a deviation between the target values of the electric currents in those phases and actual electric current values in those phases.

Therefore, in the case where the electric current target values for the motor varies dynamically, especially in the case of an electromagnetic suspension device that the motor is rotated forcibly by input of a dynamic external force from a road surface during running of a vehicle, there occurs a situation where the d-phase electric current is not completely controlled to 0.

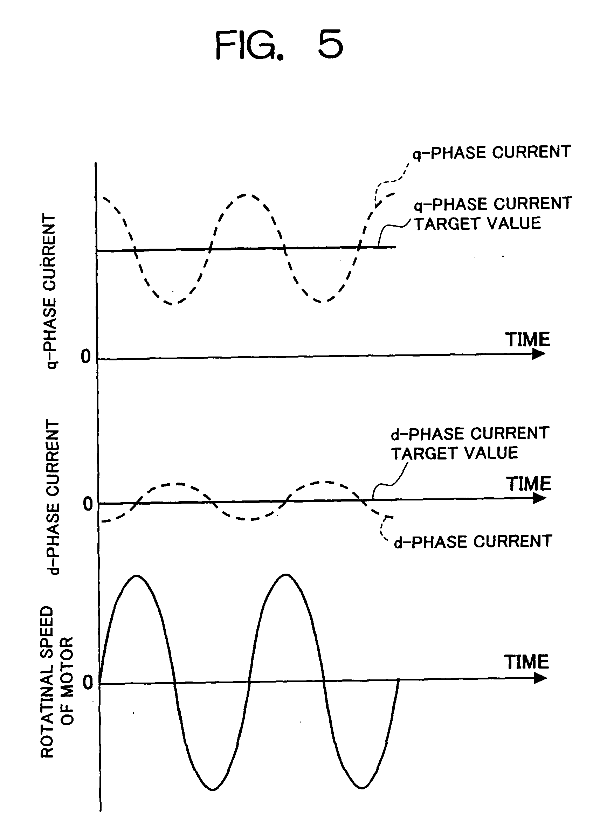

As a result, as shown in FIG. 5, the q-phase voltage is interfered by the d-phase electric current and is influenced by induced electromotive force, the other d-phase voltage is influenced by the q-phase electric current and the q-phase electric current cannot be controlled to the q-phase electric current target value.

In the electromagnetic suspension device, particularly when the expansion/contraction stroke speed is high, the rotor's electrical angle velocity also becomes high in comparison with the motor in an ordinary working environment, so that the foregoing interference becomes more influential and the control force which the electromagnetic suspension device generates varies greatly. Consequently, the electromagnetic suspension device can no longer generate its intended control force, resulting in that not only the ride comfort in the vehicle is deteriorated but also tuning of the electromagnetic suspension device becomes difficult.

Moreover, it is necessary for the electromagnetic suspension device to exert a sufficient control force even when the expansion/contraction stroke speed is high. In case of performing a field weakening control involving applying a field weakening electric current positively to d phase in order to let the motor generate sufficient torque even in high-speed rotation, the interference becomes more influential.

The present invention has been accomplished to remedy the above-mentioned drawbacks and it is an object of the invention to provide an electromagnetic suspension device capable of improving the ride comfort in a vehicle.

According to the present invention, as means for solving the above-mentioned problems there is provided, in an electromagnetic suspension device comprising one member, the other member adapted to perform a relative motion with respect to the one member, and a motor capable of at least suppressing the relative motion, and wherein electric current values of d and q phases are determined using dq conversion from electric currents flowing in the motor and an electrical angle of a rotor, and the motor is controlled on the basis of both d-phase voltage command value and q-phase voltage command value, the improvement characterized by further comprising correction means for correcting the d-phase voltage command value on the basis of both q-phase electric current and electrical angular velocity of the rotor and correcting the q-phase voltage command value on the basis of both d-phase electric current and electrical angular velocity of the rotor.

According to the electromagnetic suspension device of the present invention, both d- and q-phase voltage command values are corrected by the correction means, the q-phase electric current does not interfere with d-phase voltage, further, the d-phase electric current does not interfere with q-phase voltage and the influence of induced electromotive force is eliminated, so that the d- and q-phase electric currents are controlled to respective d- and q-phase electric current target values.

Thus, according to the electromagnetic suspension device of the present invention, the d- and q-phase electric currents can be controlled to respective electric current target values and it is possible to generate an intended control force without variation of the generated control force. Consequently, it is possible to improve the ride comfort in a vehicle and tuning of the electromagnetic suspension device becomes easier.

BRIEF DESCRIPTION OF THE DRAWINGS

FIG. 1 is a conceptual diagram of an electromagnetic suspension device.
FIG. 2 is a system diagram of a control unit in the electromagnetic suspension device according to an embodiment of the present invention.
FIG. 3 is a diagram showing a PWM circuit.
FIG. 4 is a conceptual diagram of an electromagnetic suspension device according to another embodiment of the present invention.
FIG. 5 is a diagram showing the state of d- and q-phase electric current target values and that of d- and q-phase electric currents in a conventional electromagnetic suspension device.

BEST MODE FOR CARRYING OUT THE INVENTION

The present invention will be described hereunder by way of embodiments thereof illustrated in the drawings.

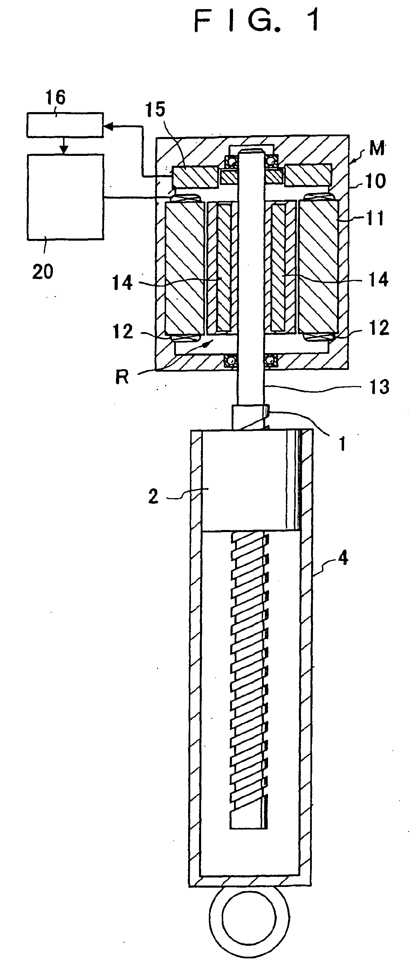

As shown in FIG. 1, an electromagnetic suspension device according to an embodiment of the present invention is made up of a screw shaft 1 as one member, a ball screw nut 2 adapted to perform a relative motion with respect to the screw shaft 1, and a motor M.

More specifically, the screw shaft 1 is threadedly engaged with the ball screw nut 2 rotatably and an upper end in FIG. 1 of the screw shaft 1 is connected to a rotor R of the motor M. On the other hand, the ball screw nut 2 is fixed to an upper end of a tube 4 into which the screw shaft 1 is inserted and the ball screw nut 2 can be connected through the tube 4 to one of a sprung member and an unsprung member of a vehicle.

The screw shaft 1 is connected rotatably to the other of the vehicular sprung and unsprung members. More specifically, the screw shaft 1 is journaled to a ball bearing provided in the other of the vehicular sprung and unsprung members, or the motor M is fixed to the other of the vehicular sprung and unsprung members.

Therefore, when the screw shaft 1 and the ball screw nut 2 perform a linear relative motion in the axial direction, the screw shaft 1 performs a rotational motion, which rotational motion is transmitted to the rotor R of the motor M. In this connection, there may be adopted a construction wherein the rotational speed of the screw shaft 1 is reduced through a reducer constituted for example by a gear mechanism and then the rotational motion of the screw shaft 1 is transmitted to the rotor R.

In the case where the screw shaft 1 is made unrotatable and instead the ball screw nut 2 is rotated when both of them perform a linear relative motion in the axial direction, the rotational motion of the ball screw nut 2 may be transmitted to the rotor R of the motor M. More particularly, this can be done by connecting the screw shaft 1 to one of the vehicular sprung and unsprung members unrotatably, connecting the ball screw nut 2 to the other of the vehicular sprung and unsprung members rotatably through a ball bearing or the like, and transmitting the rotational motion of the ball screw nut 2 to the rotor R of the motor M through a gear mechanism or a friction wheel mechanism.

In this case, the motor M is constituted as a three-phase brushless motor including a cylindrical frame 10, a stator as an armature disposed on the inner periphery side of the frame 10, and the rotor R journaled to the frame 10 rotatably. More specifically, the stator includes an annular stator core 11 having plural teeth and windings 12 in U, V and W phases wound round the teeth. The rotor R includes a shaft 13 and a driving magnet 14 mounted on a yoke portion of the shaft 13.

The driving magnet 14 is made up of magnet blocks so as to realize a predetermined pole number of blocks and is embedded in the yoke portion of the shaft 13. The motor M is an embedded magnet type motor. Of course, the driving magnet 14 may be blocked so as to realize a predetermined number of poles and be bonded to the outer periphery of the shaft 13 or may be formed annularly, magnetized in a divided manner and be fitted on the outer periphery of the shaft 13. In the case of a surface magnet type, an eddy current loss is apt to occur on the surface of the driving magnet 14 during a field weakening control to be described later. Thus, the embedded magnet type is preferred.

A position sensor 15 is mounted on the motor M to detect a rotational position of the rotor R. More specifically, the position sensor 15 is for example made up of a resolver core mounted on the shaft 13 and a resolver stator mounted on the frame 10 in opposition to the resolver core. The position sensor 15 is connected to a calculating section 16 as calculating means. The calculating section 16 receives a signal outputted from the position sensor 15, then dedicatedly calculates and outputs an electrical angle θ and an electrical angular velocity ω of the rotor R.

In this electromagnetic suspension device, as described above, the motor M is used as a drive source, so when electrical energy is given to the motor M to drive the motor, the screw shaft 1 is rotated, whereby the screw shaft 1 and the ball screw nut 2 can be allowed to perform a relative linear motion positively, that is, can be stroked and it is possible to let the motor function as an actuator.

In the motor M, upon forced input of a rotational motion from the screw shaft, an electric current flows in each winding 12 by virtue of induced electromotive force and electric power provided from a power supply, thereby forming a magnetic field and creating an electromagnetic field, with consequent generation of torque for suppressing the rotational motion of the screw shaft 1. Thus, the motor M functions to suppress a relative linear motion between the screw shaft 1 and the ball screw nut 2. In this case, with electric power resulting from regeneration and conversion of externally inputted kinetic energy into electrical energy, which is done by the motor M, or with electric power provided from the power supply in addition to the said regeneration, the resulting torque can suppress the relative linear motion between the screw shaft 1 and the ball screw nut 2.

Thus, in this electromagnetic suspension device, since the motor M can be allowed to function as both an actuator and a generator, not only it is possible to suppress the relative linear motion between the screw shaft 1 and the ball screw nut 2, but also it is possible to make the most of the function as an actuator and thereby control the attitude of the vehicular body. In this way the electromagnetic suspension device can also exhibit the function of an active suspension.

More specifically, for controlling the electric currents flowing in the windings 12 of the motor M, the windings 12 of U, V and W phases are connected to a control unit 20 and the motor M is drive-controlled by the control unit 20.

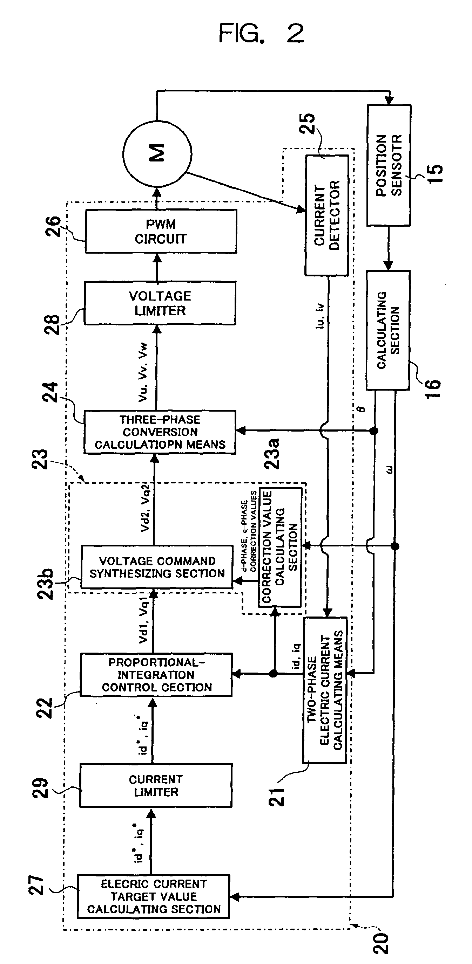

As shown in FIG. 2, the control unit 20 basically includes an electric current target value calculating section 27 which calculates electric current target values id* and iq* on the basis of a torque command inputted from a vehicle control unit (not shown), the vehicle control unit controlling the electrical angle velocity ω outputted from the calculating section 16 and the vehicle attitude, two-phase electric current calculating means 21 which performs dq conversion of electric currents flowing in two of three phases and calculates a d-phase electric current value id and a q-phase electric current value iq, a proportional-integral control section 22 which calculates a d-phase voltage command value Vd1 and a q-phase voltage command value Vq1 on the basis of the electric current target values id*, iq* and the electric current values id, iq, a correcting section 23 which corrects the d-phase voltage command value Vd1 on the basis of the q-phase current iq and also corrects the q-phase voltage command value Vq1 on the basis of the d-phase electric current id to calculate an after-d-phase-correction voltage command value Vd2 and an after-q-phase-correction voltage command value Vq2, three-phase conversion calculation means 24 for converting the after-d-phase-correction voltage command value Vd2 and the after-q-phase-correction voltage command value Vq2 into voltage command values Vu, Vv and Vw of U, V and W phases, a current detector 25 for detecting electric current values of electric currents flowing in two of three phases U, V and W of the three-phase brushless motor, e.g. electric current values iu and iv, and a PWM circuit 26.

The control unit 20 performs a proportional-integral control for the motor M on the basis of deviations ed and eq between the electric current target values id*, iq* determined by the electric current target value calculating section 27 and the electric current values id, iq of d and q phases obtained as a calculation result in the two-phase electric current calculating means 21.

The electric current target value calculating section 27 outputs the d- and q-phase electric current target values id* and iq* to the proportional-integral control section 22 in accordance with a predetermined control rule and on the basis the torque command outputted from the foregoing vehicle control unit and the electrical angular velocity ω of the rotor R. In this case, as the vehicle control rule in the vehicle control unit there is used vehicle body attitude control or vibration suppressing control such as skyhook control. The output to the electric current target value calculating section 27 is not limited to the torque command. The output may be in the form of, for example, a force command or a q-phase electric current target value and a corresponding conversion may be done in the electric current target value calculating section 27. Of course, a modification may be made such that a signal necessary for vehicle control such as sprung speed is picked up by the electric current target value calculating section 27 of the control unit 20, which in turn calculates a vehicle control rule.

As the current detector 25 there may be used a non-contact type detector using a Hall element or a winding or a current sensor which acquires electric current values from voltage drops of resistors interposed in series with three-phase windings respectively.

It suffices for the current detector 25 to detect electric current values of electric currents flowing in two of U, V and W phases. This is because if two-phase electric current values are detected, they can be converted to d- and q-phase electric current values from the rotor's electrical angle θ in accordance with an expression (2) to be described later.

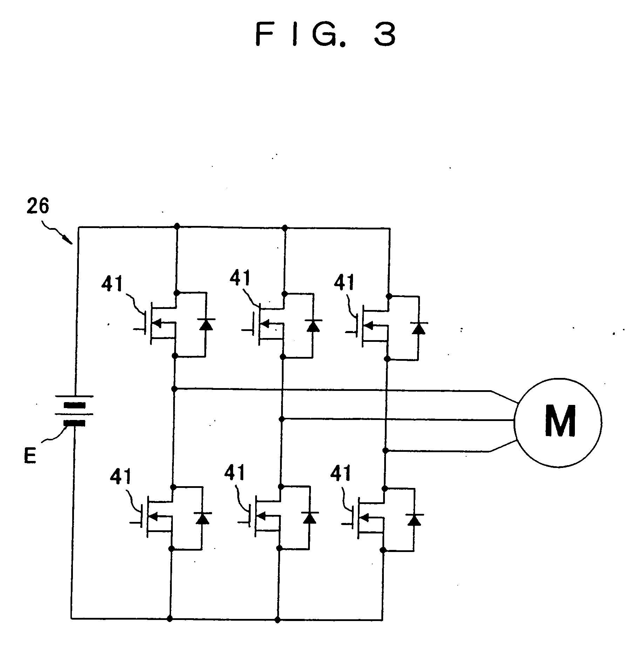

As shown in FIG. 3, the PWM circuit 26 includes six switching elements 41 for the supply of an electric current to each of three-phase windings C in the motor M and a pulse generator (not shown) such as a multi-vibrator for applying PWM pulse signals to the switching elements 41. The PWM circuit 26 supplies an electric current to each of the above phases on the basis of voltage command values Vu, Vv and Vw outputted by the three-phase conversion calculation means 24 and at a predetermined PWM duty ratio.

Using the electrical angle θ and as shown in the following expression (2), the two-phase electric current calculating means 21 performs calculation for converting the electric current values iv and iu into d- and q-phase electric current values id and iq and outputs the thus-converted d- and q-phase electric current values id and iq to the proportional-integral control section 22.

$$\begin{pmatrix} id \\ iq \end{pmatrix} = \sqrt{2} \begin{pmatrix} sin(\theta + \frac{1}{3}\pi) & sin\,\theta \\ cos(\theta + \frac{1}{3}\pi) & cos\,\theta \end{pmatrix} \cdot \begin{pmatrix} iu \\ iv \end{pmatrix} \quad \cdots (2)$$

The proportional-integral control section 22 calculates deviations between the electric current target values id*, iq* and the electric current values id, iq, then integrates the deviations, multiplies the deviations and integral values by a suitable gain respectively and outputs d- and q-phase voltage command values Vd1, Vq1.

Next, the correcting section 23 includes a correction value calculating section 23a, the correction value calculating section 23a calculating a d-phase voltage correction value Vda by multiplying a reactance ωL in a motor M winding by the q-phase electric current iq, the reactance ωL comprising the electrical angular velocity ω of the rotor R and one winding inductance L of the motor M, also calculating a q-phase voltage correction value Vqa by adding the product of the reactance ωL and the d-phase electric current id to an induced electromotive force ωF, the induced electromotive force being obtained by multiplying the electrical angle velocity ω by a maximum magnetic flux interlinkage value F, and a voltage command synthesizing section 23b for calculating an after-d-phase-correction voltage command value Vd2 by adding the d-phase voltage correction value Vda to the d-phase voltage command value Vd1 and further calculating an after q-phase correction voltage command value Vq2 by adding the q-phase voltage correction value Vqa to the q-phase voltage command value Vq1.

The influence of the d-phase electric current id on the q-phase voltage Vq and the influence of the q-phase electric current iq on the d-phase voltage Vd are as shown in the following expression (3) if the electrical angular velocity ω, reactance ωL and maximum magnetic flux interlinkage value F are used for the d- and q-phase voltage command values Vd', Vq'. In the following expression, R stands for winding resistance and P stands for a differential operator:

$$\begin{pmatrix} Vd \\ Vq \end{pmatrix} = \begin{pmatrix} R+PL & -\omega L \\ \omega L & R+PL \end{pmatrix} \cdot \begin{pmatrix} id \\ iq \end{pmatrix} + \begin{pmatrix} 0 \\ \omega \Phi \end{pmatrix} + \begin{pmatrix} Vd' \\ Vq' \end{pmatrix} \cdots (3)$$

On the other hand, the d- and q-phase voltage correction values Vda, Vqa obtained by the correction value calculation section 23a are calculated by the following expression (4):

$$\begin{pmatrix} Vda \\ Vqa \end{pmatrix} = \begin{pmatrix} \omega Liq \\ -\omega (\Phi +Lid) \end{pmatrix} \cdots (4)$$

The after-d-phase-correction command value Vd2 and the after-q-phase correction command value Vq2 both outputted by the voltage command synthesizing section 23b are shown by the following expression (5):

$$\begin{pmatrix} Vd2 \\ Vq2 \end{pmatrix} = \begin{pmatrix} Vd1 \\ Vq1 \end{pmatrix} + \begin{pmatrix} \omega Liq \\ -\omega (\Phi +Lid) \end{pmatrix} \cdots (5)$$

If the after-d-phase-correction command value Vd2 and the after-q-phase-correction command value Vq2 are substituted into the d-phase voltage command value Vd' and the q-phase voltage command value Vq', respectively, in the above expression (3), the d- and q-phase voltages Vd, Vq are shown by the following expression (6):

$$\begin{pmatrix} Vd \\ Vq \end{pmatrix} = \begin{pmatrix} R+PL & 0 \\ 0 & R+PL \end{pmatrix} \cdot \begin{pmatrix} id \\ iq \end{pmatrix} + \begin{pmatrix} Vd1 \\ Vq1 \end{pmatrix} \cdots (6)$$

A look at the above expression (6) shows that the q-phase electric current iq exerts no influence on the d-phase voltage Vd and neither do the d-phase electric current id and the induced electromotive force ωF on the q-phase voltage Vq.

Thus, in this electromagnetic suspension device, the influence of the q-phase electric current iq on the d-phase voltage command value Vd1 can be eliminated by the correcting section 23 as correction means, likewise the influence of the d-phase electric current Vd and the induced electromotive force ωF on the q-phase voltage command value Vq1 can be eliminated, and the q-phase electric current iq can be controlled accurately to a desired value.

After the above correction, the after-d-phase-correction voltage command value Vd2 and the after-q-phase-correction voltage command value Vq2 are inputted to the three-phase conversion calculation means 24 for making the foregoing conversion. By the calculation of the foregoing expression (1) the three-phase conversion calculation means 24 converts the after-d-phase-correction voltage command value Vd2 and the after-q-phase-correction voltage command value Vq2 into actual U-, V- and W-phase voltage command values Vu, Vv and Vw and outputs the thus-converted voltage command values Vu, Vv and Vw to the PWM circuit 26.

The control unit 20 includes a voltage limiter 28 and a current limiter 29. When the PWM opening is full open, that is, when the PWM duty ratio is a maximum value or more, the voltage limiter 28 limits the voltage command values Vu, Vv and Vw outputted by the three-phase conversion calculation means 24 to values which maximizes the PWM duty ratio. The current limiter 29 is for clamping the electric current target values id* and iq* lest they should exceed predetermined values.

As hardware, the control unit 20 is constituted for example as a known computer system (not shown) including an amplifier for amplifying the signals outputted from the current detector 25, a converter for converting an analog signal into a digital signal, a CPU (Central Processing Unit) as a processor for processing signals provided from the current detector 25 and the calculating section 16 and performing various arithmetic operations, memories such as ROM (Read Only Memory) and RAM (Random Access Memory), a crystal oscillator, and a bus line for connection of these components. The control unit 20 is configured so that it can output the voltage command values Vu, Vv and Vw to the PWM circuit 26.

In this case, control processing procedures for calculating target values, correction values and command values in the two-phase electric current calculating means 21, proportional-integral control section 22, correcting section 23, three-phase conversion calculation means 24 and electric current target value calculating section 27 are pre-stored as programs in ROM or other memories. Since the inductance L and the maximum magnetic flux interlinkage value F which are required in the correction value calculating section 23a are constants, all that is required is to measure those values in advance, store them into a memory and read them at the beginning of the associated control processing procedure.

Next, a description will be given about the operation of the electromagnetic suspension device. Upon input of a dynamic vibration from a road surface during running of a vehicle, the output torque of the motor M is controlled by the control unit 20 described above to suppress the transfer of the vibration to the vehicle body side. In this connection, as described above, the d- and q-phase voltage command values Vd1 and Vq1 are corrected by the correcting section 23, the q-phase electric current iq does not interfere with the d-phase voltage Vd, neither does the d-phase electric current id interfere with the q-phase voltage Vq, and the influence of the induced electromotive force ωF on the q-phase voltage Vq can be eliminated. Therefore, the d- and q-phase electric currents id, iq can be controlled to the d- and q-phase electric current target values id*, iq*, respectively.

Thus, according to this electromagnetic suspension device, the electric currents id and iq can be controlled to the respective electric current target values id* and iq* and thus it is possible to generate a desired control force without variation of the generated control force, so that it is possible to improve the ride comfort in the vehicle and tuning of the electromagnetic suspension device becomes easier.

In this embodiment it is not that the control unit 20 directly processes the signal outputted from the position sensor 15 and calculates the electrical angle θ and electrical angular velocity ω of the rotor R. But there is provided the calculating section 16 dedicated to the calculation of both electrical angle θ and electrical angular velocity ω. Therefore, if only the arithmetic operation cycle in the calculating section 16 is set so as to permit calculation of the electrical angular velocity ω in a high frequency region, it becomes possible to effect control with a high accuracy even without keeping the operation cycle of the arithmetic processor in the control unit 20 very high in speed. Consequently, it is possible to reduce the cost of the entire device.

When the expansion/contraction stroke speed of the electromagnetic suspension device becomes higher than a predetermined value, for example, when the vehicle is running and gets over a step while turning sharply, the motor M is compelled to rotate at high speed while generating a large torque.

Even in such a case, since the induced electromotive force is large and the amount of the generated q-phase electric current iq contributing to torque is limited, there occurs a case where the required torque cannot be generated. Therefore, the electric current target value calculating section 27 performs a field weakening control for weakening the field of the motor and sets the d-phase electric current target value id* to a predetermined negative value to let an electric current not contributing to torque flow in d phase positively, thereby weakening the field of the motor and allowing an electric current of a larger value to flow in q phase.

As an inevitable result of such a positive field weakening control, the d- and q-phase electric currents id, iq interfere with the d- and q-phase voltages Vd, Vq. However, in this electromagnetic suspension device, as described above, that interference can be prevented from occurrence by the processing performed in the correcting section 23. Accordingly, even during the field weakening control, the d- and q-phase electric currents id, iq can be controlled to the respective electric current target values id* and iq* and a desired control force can be generated without variation of the generated control force. Besides, even in the case where the expansion/contraction stroke speed becomes high, the electromagnetic suspension device can exhibit a control force sufficient to suppress vibration of the vehicle body and hence it is possible to improve the ride comfort in the vehicle.

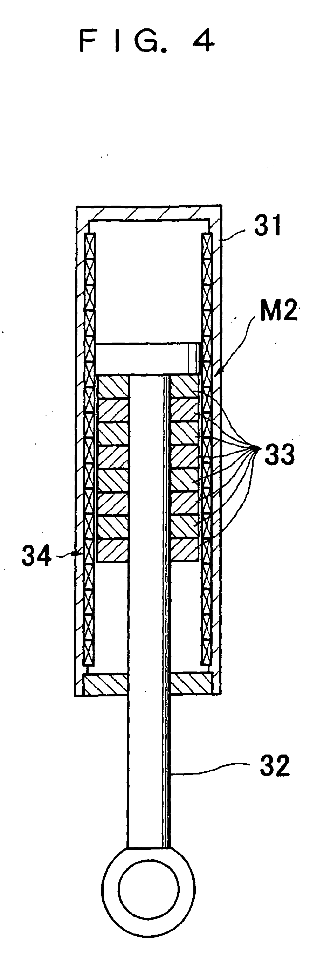

Referring now to FIG. 4, there is illustrated an electromagnetic suspension device according to another embodiment of the present invention. This electromagnetic suspension device is comprised of a tube 31 as one member, a rod 32 as the other member adapted to perform a relative motion with respect to the tube 31, and a motor M2 capable of at least suppressing the said relative motion.

More specifically, the tube 31 is connected to one of a sprung member and an unsprung member of a vehicle and the rod 32 connected to the other of the sprung and unsprung members of the vehicle are inserted into the tube 31.

Further, the motor M2 includes driving magnets 33, the driving magnets being mounted on the outer periphery of the rod 32 in such a manner that S and N poles appear alternately in the axial direction, and windings 34 mounted within the tube 31 in opposition to the driving magnets 33, the windings 34 being disposed in such a manner that U, V and W phases are arranged alternately in the axial direction of the tube 31 over a predetermined length.

The windings 34 mounted within the tube 31 are formed annularly by molding and are coated on at least inner periphery side with resin for example. Further, annular bearings (not shown) are disposed between the inner peripheries of the windings 34 and the outer periphery of the rod 32 or the driving magnets 33 to prevent axial eccentricity of the rod 32 with respect to the tube 31.

Thus, this another electromagnetic suspension device is of a so-called linear motor type construction wherein when the rod 32 performs a relative motion while moving forward or backward with respect to the tube 31, the driving magnets 33 move relatively with respect to the windings 34. Also in this another electromagnetic suspension device, as in the electromagnetic suspension device of the previous embodiment, the motor M2 functions as both motor and generator and the operation thereof is the same as that of the motor M.

Therefore, with a control unit 20 provided with the same correcting section 23 as in the previous embodiment, it is possible to eliminate interference of the q-phase electric current iq with the d-phase voltage Vd, interference of the d-phase electric current id with the q-phase voltage Vq and the influence of induced electromotive force. Accordingly, as in the electromagnetic suspension device of the previous embodiment, the d- and q-phase electric currents id and iq can be controlled to the respective electric current target values id* and iq* and the desired control force can be generated without variation of the generated control force. Consequently, it is possible to improve the ride comfort in the vehicle and tuning of the electromagnetic suspension device becomes easier.

The present invention has been described above by way of embodiments thereof, but it goes without saying that the scope of the present invention is not limited to the details illustrated or explained.

INDUSTRIAL APPLICABILITY

The electromagnetic suspension device of the present invention is applicable to a vehicular suspension.

**Claims**

1. In an electromagnetic suspension device comprising one member, the other member adapted to perform a relative motion with respect to the one member, and a motor capable of at least suppressing said relative motion, and wherein electric current values of d and q phases are determined using dq conversion from electric currents flowing in the motor and an electrical angle of a rotor, and the motor is controlled on the basis of both d-phase voltage command value and q-phase voltage command value, the improvement **characterized by** further comprising correction means for correcting the d-phase voltage command value on the basis of both q-phase electric current and electrical angular velocity of the rotor and correcting the q-phase voltage command value on the basis of both d-phase electric current and electrical angular velocity of the rotor.

2. An electromagnetic suspension device according to claim 1, wherein the correction means corrects the d-phase voltage command value and the q-phase voltage command value so as to eliminate interference of the q-phase electric current with the d-phase voltage and interference of both d-phase electric current and induced electromotive force with the q-phase voltage.

3. An electromagnetic suspension device according to claim 1, wherein the field of the motor is weakened when the expansion/contraction stroke speed equals or exceeds a predetermined speed.

4. An electromagnetic suspension device according to claim 2, wherein the field of the motor is weakened when the expansion/contraction stroke speed equals or exceeds a predetermined speed.

5. An electromagnetic suspension device according to claim 1, comprising calculation means for dedicatedly calculating an electrical angle and an electrical angular velocity of the rotor upon receipt of a signal from a resolver which is for detecting an electrical angle of the rotor.

6. An electromagnetic suspension device according to claim 2, comprising calculation means for dedicatedly calculating an electrical angle and an electrical angular velocity of the rotor upon receipt of a signal from a resolver which is for detecting an electrical angle of the rotor.

7. An electromagnetic suspension device according to claim 3, comprising calculation means for dedicatedly calculating an electrical angle and an electrical angular velocity of the rotor upon receipt of a signal from a resolver which is for detecting an electrical angle of the rotor.

8. An electromagnetic suspension device according to claim 4, comprising calculation means for dedicatedly calculating an electrical angle and an electrical angular velocity of the rotor upon receipt of a signal from a resolver which is for detecting an electrical angle of the rotor.

# F I G. 1

FIG. 2

# FIG. 3

# F I G. 4

# FIG. 5

q-PHASE CURRENT

q-PHASE CURRENT TARGET VALUE

TIME

d-PHASE CURRENT TARGET VALUE

TIME

d-PHASE CURRENT

TIME

| INTERNATIONAL SEARCH REPORT | International application No. |
|---|---|
| | PCT/JP2006/323259 |

**A. CLASSIFICATION OF SUBJECT MATTER**
*B60G17/00*(2006.01)i, *B60G17/018*(2006.01)i, *F16F15/03*(2006.01)i, *H02P21/00*(2006.01)i, *H02P27/04*(2006.01)i

According to International Patent Classification (IPC) or to both national classification and IPC

**B. FIELDS SEARCHED**

Minimum documentation searched (classification system followed by classification symbols)
B60G1/00-25/00, F16F15/00-15/36, H02P21/00, H02P27/04

Documentation searched other than minimum documentation to the extent that such documents are included in the fields searched
Jitsuyo Shinan Koho 1922-1996 Jitsuyo Shinan Toroku Koho 1996-2006
Kokai Jitsuyo Shinan Koho 1971-2006 Toroku Jitsuyo Shinan Koho 1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 02-120113 A (Ford Motor Co.),<br>08 May, 1990 (08.05.90),<br>Page 5, upper right column, line 5 to page 6,<br>upper left column, line 16; page 11,<br>upper right column, line 17 to page 12, upper<br>left column, line 15; Figs. 1, 2, 4, 6A<br>& US 5027048 A          & US 5060959 A<br>& EP 0363158 A2 | 1-8 |
| Y | JP 08-182398 A (Fuji Electric Co., Ltd.,<br>Nissan Motor Co., Ltd.),<br>12 July, 1996 (12.07.96),<br>Par. Nos. [0002] to [0012]; Fig. 5<br>& US 5656911 A | 1-8 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>19 December, 2006 (19.12.06) | Date of mailing of the international search report<br>26 December, 2006 (26.12.06) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/323259 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 2005-132298 A  (Toyota Motor Corp.),<br>26 May, 2005 (26.05.05),<br>Par. No. [0023]<br>(Family: none) | 3,4,7,8 |
| Y | JP 62-203596 A (Mitsubishi Heavy Industries,<br>Ltd.),<br>08 September, 1987 (08.09.87),<br>Page 2, lower left column, line 16 to page 3,<br>lower left column, line 15; Figs. 4, 5<br>(Family: none) | 5-8 |
| A | JP 08-275599 A  (Meidensha Corp.),<br>18 October, 1996 (18.10.96),<br>Par. No. [0030]<br>(Family: none) | 3,4 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003104025 A

- JP HEI61994153569 B